# EUROPEAN PATENT SPECIFICATION

(11) **EP 2 422 895 B1**
(45) Date of publication and mention of the grant of the patent: **20.11.2013**
(21) Application number: 10174050.4
(22) Date of filing: 25.08.2010
(51) Int. Cl.: B21D 28/30, B21D 28/34, B60B 21/06

(54) **Method and device for punching holes in double-walled materials**
Verfahren und Vorrichtung zum Durchstechen von Löchern in doppelwandige Materialien
Procédé et dispositif pour poinçonner des trous dans des matériaux à double paroi

(43) Date of publication of application: 29.02.2012
(73) Proprietor: Holland Mechanics BV, 1442 PZ Purmerend (NL)
(72) Inventor: Wessels, Jasper Johannes, 1135 VG Edam (NL)
(74) Representative: Klavers, Cornelis

(56) References cited:
- WO-A1-96/11075
- DE-U1- 29 710 623
- FR-A- 833 629
- FR-A- 911 297
- NL-C1- 1 025 214

## Description

The present invention relates to a method of making holes in a first plate and in a second plate situated at a distance from the first plate comprising the steps of punching a hole in the first and second plate by means of a punch nipple.

Such a method is known from WO 96/11075. In the known method first and second hole are punched out of the first and second plate materials respectively by means of the same punch nipple and the respective punched out material discs are discarded. By a pushing through of the punch nipple a widened conical nipple part forces the first hole in the first plate to become a widened hole due to a local pushing aside of the material around the first hole.

It is a disadvantage of the known method that a lot of energy is involved in the pushing through of the punch nipple during the widening part of the manufacturing method. Furthermore the result thereof is a widened hole in the first plate which shows some rather unpredictable mechanical characteristics, in particular in different directions, whereby even the side of the widened hole may become carved.

Document NL 1 025 214 C1 describes a method according to the preamble of claim 1.

It is an object of the present invention to provide an environmental friendly manufacturing method, which shows advantages in terms of cost price, strength and reproducibility, and which is particularly well suited for manufacturing rims of high end spoke wheels.

Thereto the method according to the invention has the features that it comprises the steps of punching a hole in the first plate by means of a punch nipple; punching a concentric part which includes the hole out of the first plate; punching a hole in the second plate by means of the punch nipple; pushing the punched out concentric part onto the hole into the second plate.

It is an advantage of the method according to the present invention that a concentric part which forms the widened hole in the first plate is punched out. This also results in more predictable mechanical, durability and stress characteristics of the punched first plate. This punched out concentric part is however not discarded as waste but inserted and pushed into and around the hole in the second plate. This results in increased strength and stress characteristics especially around the hole in the second plate, which in turn may result in material savings.

If applied on a double walled hollow rim for a spoke wheel this means for the method according to the invention that the place of the rim where the spoke is to be inserted and fastened to the rim is provided with additional strength which is very useful at that place. It is found out that as a consequence thereof the whole rim can be made 5% - 10% lighter in weight, which saves light material in the rim, in general aluminium, without jeopardising the stress demands of present day spoke wheels such as posed on racing bikes.

A still further advantage of the method according to the invention is that principally it can be applied in one fast stroke of the punch nipple, which means that the method is fast and cost price friendly. In addition the material of the plates is not given sufficient time to deform, which results in relatively easy to achieve tight tolerances in the sizes and the finishing level of in particular the holes.

At present the method according to the invention will be elucidated further together with its additional advantages, while reference is being made to the appended drawing, wherein similar components are being referred to by means of the same reference numerals. In the drawing:
Figs. 1 and 2 each show from left to right in six consecutive steps outlines of respective possible embodiments of the method according to the invention; and
Figs. 3A and 3B each show details of the punch nipple for application in the methods according to figs 1 and 2.

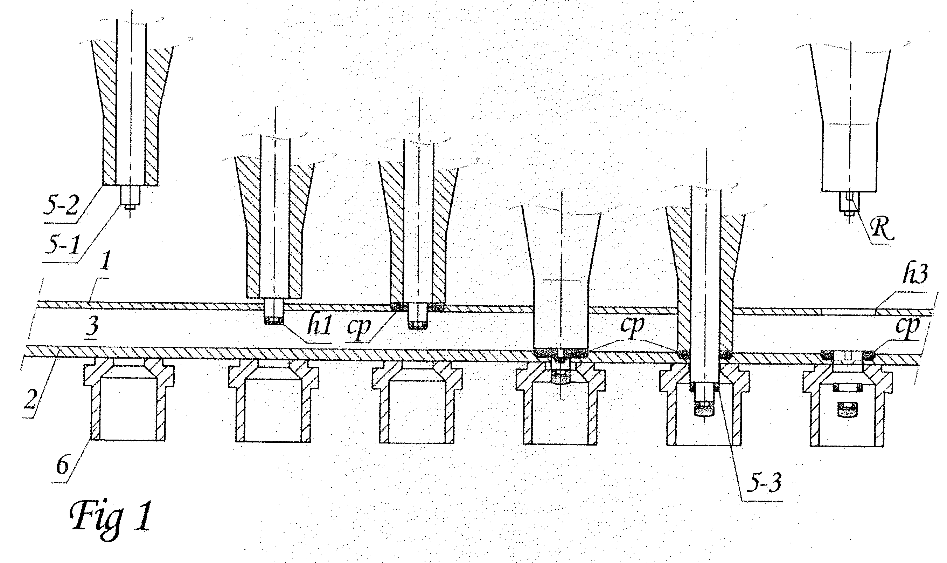

Fig. 1 shows in 6 steps a method for punching holes h1, h2, ... in a first plate 1 and in a second plate 2 situated at a distance 3 from the first plate 1.

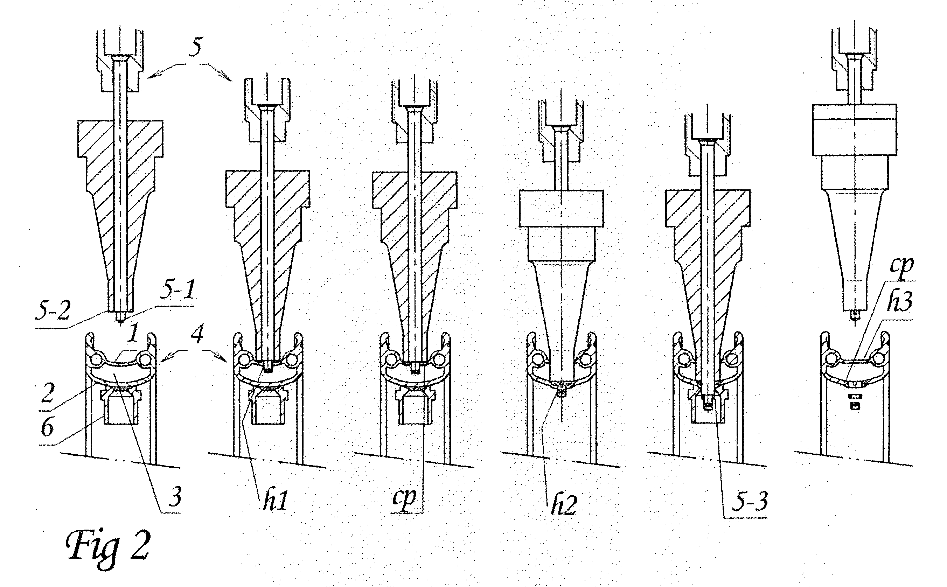

A similar method is shown in fig. 2 where the first plate and the second plate form the outer rim 1 and the inner rim 2 respectively of a rim 4 of a spoke wheel (not shown). The rim 4 is provided with a hollow, also designated for ease with reference numeral 3, between the outer rim 1 and the inner rim 2.

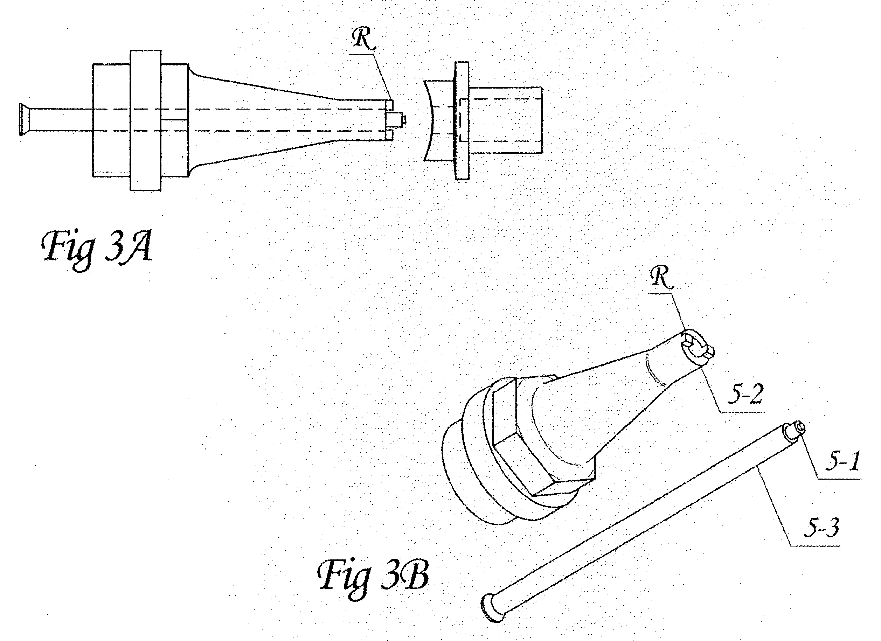

Both methods comprise the steps of punching the first hole h1 in the first plate 1 by means of a punch nipple 5 to be elucidated further hereafter. Then in random order the method follows the steps of either punching a concentric part CP which includes the hole h1 out of the first plate 1, and punching the hole h2 in the second plate 2 both by means of the punch nipple 5. The holes h1 and h2 are both punched by means of an extendible inner cutting edge part 5-1 of the punch nipple 5, which is shown in detail in figs. 3A and 3B.

Both figs 1 and 2 show the embodiment wherein after punching the first hole h1 with the inner edge part 5-1, the concentric part CP is punched out by means of an outer cutting edge part 5-2. The punch nipple is built as a coaxial punch nipple having the inner cutting part 5-1 which is movable relative to the outer cutting part 5-2, which surrounds the inner cutting part 5-1. Both these parts 5-1, 5-2 may have a wanted section. In particular the part 5-2 may be shaped to allow for an unimpeded entry of tools during assembly of the wheel. The shape may be for example elliptic.

Then the punched out concentric part CP is pushed onto and around the hole h2 of the second plate 2. This reinforces the material in the plate 2 which surrounds the hole h2. The concentric part CP as punched out forms a wider hole h3 in the first plate 1 where through the punch nipple passes when making the hole h2 in the second plate 2. The transport of the concentric part CP from the first plate 1 to the second plate 2 takes place by means of the punch nipple 5 being pushed through the hole h3. If required to achieve a good attachment of said part CP into the second plate material the punched out concentric part CP is fixed therein by pressing one or more press ridges R in the concentric part and also partly in the underlying fringes of the second hole h2. The punch nipple 5 has thereto the one or more press ridges R provided on an inner side of the outer cutting part 5-2 (see Fig. 3B).

In the method of Fig. 2 the hole h2 in the inner rim 2 is surrounded with press marks which are the result of the action of the press ridges R and which fix the concentric part CP in the inner rim 2.

It may be useful that after punching the hole h2 in the second plate 2 -possibly after fixing the concentric part CP around that hole h2- the hole h2 is post cut by means of a post cut nipple part 5-3 provided on the punch nipple 5. This part 5-3 surrounds the part 5-1 and is shown in the penultimate partial showings in both the figs 1 and 2.

In the embodiments of figs. 1 and 2 an under or supporting die 6 has been used in the various steps to support the second plate 2 while the components of the punch nipple 5 come down on the first and second plates 1, 2. The under supporting die 6 may be provided with a notch wherein a dimple may be formed, in which case the second plate 2 is not fully supported.

The angular orientation of the punch nipple 5 in a plane parallel to and/or perpendicular to the plane of the drawing of fig. 2 may be changed to some extent from one hole h2 to the next hole h2, in order to account for the angular course of spokes and spoke nipples to be fixed to the inner rim 2 in some wanted pattern. Consequently the angular orientation of the concentric part CP whereon the spoke nipples bear down on in particular the outer side of the inner rim 2 changes accordingly, which also increases the stability of the spooked wheel.

## Claims

1. A method of making holes in a first plate (1) and in a second plate (2) situated at a distance from the first plate (1) comprising the steps of:
1) punching a hole (h1) in the first plate (1) by means of a punch nipple (5; 5-1);
2) punching a concentric part (cp) which includes the hole (h1) out of the first plate (1);
3) punching a hole (h2) in the second plate (2) by means of the punch nipple (5; 5-1);
the method being **characterised by**
4) pushing the punched out concentric part (cp) onto the hole (h2) into the second plate (2).

2. The method according to claim 2, **characterised in that** the concentric part (cp) punched out forms a wider hole (h3) in the first plate (1) where through the punch nipple (5) passes when making the hole (h2) in the second plate (2).

3. The method according to any of the claims 1-2, **characterised in that** transport of the punched out concentric part (cp) to the second plate (2) takes place by means of the punch nipple (5) being pushed through.

4. The method according to claim 1, **characterised in that** the steps 2 and 3 are reversed.

5. The method according to any of the claims 1-4, **characterised in that** the punched out concentric part (cp) is fixed in the second plate (2), such as for example by pressing one or more ridges (R) provided on the punch nipple (5) in the concentric part (cp), by gluing or by other suitable means for fixing the part (cp) in the second plate (2).

6. The method according to any of the claims 1-5, **characterised in that** after punching the hole (h2) in the second plate (2) the hole (h2) in the second plate (2) and/or the hole (h3) in the concentric part (cp) is/are post cut by the punch nipple (5).

7. The method according to any of the claims 1-6, **characterised in that** either or not a supporting or under punch (6) is being used in the method steps.

8. The method according to any of the claims 1-7, **characterised in that** the method comprises the step of providing a dimple in the second plate (2) by means of the punch nipple (6).

9. The method according to any of the claims 1-8, **characterised in that** both plates (1, 2) are included in one hollow rim part of a wheel rim (4) whose outer rim (1) forms the first plate (1) and whose inner rim (2) forms the second plate (2).

## Patentansprüche

1. Verfahren zum Anbringen von Löchern in einer ersten Platte (1) und in einer zweiten Platte (2), die sich in einer Entfernung von der ersten Platte (1) befindet, das die folgenden Schritte aufweist:
1) Stanzen eines Lochs (h1) in der ersten Platte (1) mittels eines Stanznippels (5; 5-1);
2) Herausstanzen eines konzentrischen Teils (cp), der das Loch (h1) aufweist, aus der ersten Platte (1);
3) Stanzen eines Lochs (h2) in die zweite Platte (2) mittels des Stanznippels (5; 5-1);
wobei das Verfahren **gekennzeichnet ist durch**:
4) Stoßen des herausgestanzten konzentrischen Teils (cp) auf das Loch (h2) in der zweiten Platte (2).

2. Verfahren nach Anspruch 1, **dadurch gekennzeichnet, dass** der herausgestanzte konzentrische Teil (cp) ein größeres Loch (h3) in der ersten Platte (1) bildet, durch das der Stanznippel (5) beim Herstellen des Lochs (h2) in der zweite Platte (2) durchgeht.

3. Verfahren nach einem der Ansprüche 1-2, **dadurch gekennzeichnet, dass** der Transport des herausgestanzten konzentrischen Teils (cp) zu der zweiten Platte (2) mittels des Stanznippels (5), der durchgedrückt wird, erfolgt.

4. Verfahren nach Anspruch 1, **dadurch gekennzeichnet, dass** die Schritte 2 und 3 umgekehrt sind.

5. Verfahren nach einem der Ansprüche 1 bis 4, **dadurch gekennzeichnet, dass** der herausgestanzte konzentrische Teil (cp) in der zweiten Platte (2) fixiert ist, wie zum Beispiel durch Drücken einer oder mehrerer Riefen (R), die auf dem Stanznippel (5) vorgesehen sind, in den konzentrischen Teil (cp), durch Kleben oder durch irgendein anderes geeignetes Mittel zum Befestigen des Teils (cp) in der zweiten Platte (2).

6. Verfahren nach einem der Ansprüche 1 bis 5, **dadurch gekennzeichnet, dass** nach dem Stanzen des Lochs (h2) in der zweiten Platte (2) das Loch (h2) in der zweiten Platte (2) und/oder das Loch (h3) in dem konzentrischen Teil (cp) durch den Stanznippel (5) nachgeschnitten wird/werden.

7. Verfahren nach einem der Ansprüche 1 bis 6, **dadurch gekennzeichnet, dass** ein stützender oder Unterstempel (6) bei den Verfahrensschritten verwendet wird oder nicht.

8. Verfahren nach einem der Ansprüche 1 bis 7, **dadurch gekennzeichnet, dass** das Verfahren den Schritt des Bereitstellens einer Einsenkung in der zweiten Platte (2) mittels des Stanznippels (6) vorsieht.

9. Verfahren nach einem der Ansprüche 1 bis 8, **dadurch gekennzeichnet, dass** beide Platten (1, 2) in einem Hohlwandfelgenteil einer Radfelge (4) enthalten sind, deren äußerer Rand (1) die erste Platte (1) bildet, und deren innerer Rand (2) die zweite Platte (2) bildet.

## Revendications

1. Procédé de faire de trous dans une première plaque (1) et dans une seconde plaque (2) situé à une distance de la première plaque (1) comprenant les étapes de:
1) poinçonner un trou (h1) dans la première plaque (1) au moyen d'un embout à poinçonner (5 ; 5-1);
2) poinçonner une partie concentrique (cp) qui inclut le trou (h1) par la première plaque (1);
3) poinçonner un trou (h2) dans la seconde plaque (2) au moyen de l'embout à poinçonner (5 ; 5-1);
le procédé étant **caractérisé par**:
4) le fait de pousser la partie concentrique poinçonnée (cp) sur le trou (h2) dans la seconde plaque (2).

2. Procédé selon la revendication 1, **caractérisé en ce que** la partie concentrique (cp) poinçonnée forme un trou plus large (h3) dans la première plaque (1) par lequel passe l'embout à poinçonner (5) quand il fait le trou (h2) dans la seconde plaque (2).

3. Procédé selon l'une quelconque des revendications 1-2, **caractérisé en ce que** le transport de la partie concentrique poinçonnée (cp) vers la seconde plaque (2) se met en place au moyen de l'embout de poinçonnage (5) qui est poussé au travers.

4. Procédé selon la revendication 1, **caractérisé en ce que** les étapes 2 et 3 sont inversées.

5. Procédé selon l'une quelconque des revendications 1-4, **caractérisé en ce que** la partie concentrique poinçonnée (cp) est fixée dans la seconde plaque (2), tel que par exemple en appuyant sur une ou plusieurs stries (R) prévues sur l'embout de poinçonnage (5) dans la partie concentrique (cp), en collant ou par tout autre moyen approprié pour fixer la partie (cp) dans la seconde plaque (2).

6. Procédé selon l'une quelconque des revendications 1-5, **caractérisé en ce que**, après avoir fait le trou (h2) dans la seconde plaque (2), le trou (h2) dans la seconde plaque (2) et/ou le trou (h3) dans la partie concentrique (cp) sont post-découpés par l'embout de poinçonnage (5).

7. Procédé selon l'une quelconque des revendications 1-6, **caractérisé en ce qu'**un poinçon de support ou un emporte-pièce (6) est utilisé ou non dans les étapes du procédé.

8. Procédé selon l'une quelconque des revendications 1-7, **caractérisé en ce que** le procédé comprend l'étape de fourniture d'une dépression dans la seconde plaque (2) au moyen de l'embout de poinçonnage (6).

9. Procédé selon l'une quelconque des revendications 1-8, **caractérisé en ce que** les deux plaques (1, 2) sont inclues dans une partie à rebord creux (4) dont le rebord extérieur (1) forme la première plaque (1) et dont le rebord intérieur (2) forme la seconde plaque (2).
